# EUROPÄISCHE PATENTANMELDUNG

(11) **EP 4 759 201 A1**
(43) Veröffentlichungstag der Anmeldung: **17.06.2026**
(21) Anmeldenummer: 25152057.3
(22) Anmeldetag: 15.01.2025
(51) Int. Cl.: A47J 31/00, A47J 31/18, A47J 31/36, A47J 31/60

(54) **VERFAHREN ZUM ERZEUGEN EINES GETRÄNKS, VORZUGSWEISE ZUM BRÜHEN VON TEE, SOWIE EINE EINRICHTUNG UND EINE MÜHLE ZUR DURCHFÜHRUNG DES VERFAHRENS**

(30) Priorität: 12.12.2024 CH 13752024
(71) Anmelder: Steiner AG Weggis, 6353 Weggis (CH)
(72) Erfinder: STEINER, Adrian, 6353 Weggis (CH)
(74) Vertreter: Luchs, Willi

(57) **Zusammenfassung**

Bei einem Verfahren zum Erzeugen eines Getränks, vorzugsweise zum Brühen von Tee, werden gemahlene Teeblätter als Teepulver (19) oder ein anderes Pulver in eine Brühkammer (17) geleitet und Wasser für den Brühprozess zugegeben, bei dem das Erzeugen des Getränks in folgenden Schritten abläuft:
➢ es erfolgt ein Zuführen des Pulvers (19) durch die Einfüllöffnung (16) beim Zylinder (15) sowie dem Zuführen des Wassers durch die Zufuhrleitung (23) in die geschlossene Brühkammer (17), und
➢ es folgt ein Brühen als erste Brühphase,
➢ danach folgt eine Ruhephase des extrahierten Getränks in der Brühkammer (17) während einer bestimmten Zeitdauer, und
➢ wobei das gebrühte Getränk zum Auslass geleitet wird,
➢ es folgt dann zumindest eine zweite Brühphase durch die erneute Zuführung von Wasser durch die Zufuhrleitung (23) in die Brühkammer (17) mit dem darin verbleibenden Pulver,
➢ und das gebrühte Getränk wird nochmals mit einer Ruhephase während einer bestimmten Verweilzeit in der Brühkammer (17) gelassen,
➢ und anschliessend wird das Getränk ebenfalls zum Auslass geleitet.

Mit diesem Brühprozess kann auf äusserst effiziente Art und Weise vorzugsweise ein sehr geschmacksvolles Teegetränk erzeugt werden.

## Beschreibung

Die Erfindung betrifft ein Verfahren zum Erzeugen eines Getränks, insbesondere zum Brühen von Tee, bei dem gemahlene Teeblätter als Teepulver in eine Brühkammer geleitet werden, danach Wasser für den Brühprozess zugegeben und das extrahierte Getränk vorzugsweise zu einem Auslass befördert wird, sowie eine Einrichtung und eine Mühle zur Durchführung des Verfahrens.

Eine Vorrichtung zur Durchführung eines Verfahrens zum Brühen von Tee gemäss der Druckschrift JP 2004118680 A1 umfasst einen Teeblattbehälter zur Aufnahme von Teeblättern, eine Mühle zum Erzeugen von zerkleinerten Teeblättern, eine Ausgabevorrichtung für die zerkleinerten Teeblätter zum Ausgeben einer vorgeschriebenen Menge an zerkleinerten Teeblättern aus diesem Behälterkörper. Zudem ist ein Heisswassertank mit einem Magnetventil für ein Ausgeben einer vorgeschriebenen Menge an Heisswasser vorgesehen. Des weiteren ist ein Teegetränkeextraktor zum Präparieren des Teegetränks vorhanden, durch den das gebrühte Teegetränk zu einer Tasse geleitet wird. Damit soll eine rasche Bereitstellung eines Teegetränks ermöglicht werden. Bei einer solchen Zubereitung mit diesem Teegetränkeextraktor besteht der Nachteil, dass das extrahierte Teegetränk in der Geschmacksentfaltung nicht optimal ausgenutzt werden kann.

In der Druckschrift EP 2 810 592 A1 ist eine Kaffeemühle offenbart, bei der zwei zusammenwirkende Mahlscheiben übereinander in einem Mühlenkörper gelagert sind, wobei die untere Mahlscheibe um eine vertikale Drehachse rotierbar ist, während die obere Mahlscheibe undrehbar und durch eine Exzenterwelle relativ zur unteren Mahlscheibe in Richtung der Drehachse verstellbar ist. Diese drehfeste Mahlscheibe ist in einem im Mühlekörper axial verschiebbaren Mahlscheibenträger angeordnet und die Exzenterwelle horizontal durch den Mahlscheibenträger geführt. Damit ist der Mahlscheibenträger durch die Exzenterwelle in vertikaler Richtung nach oben und unten bewegbar gelagert. Um diese Beweglichkeit zu ermöglichen, ist es zweckmässig, die Exzenterwelle beidseitig mit axialzylindrischen Wellenteilen zu versehen, die in entsprechenden Bohrungen des Mühlenkörpers geführt sind. Bei der Verwendung einer solchen feineinstellbaren Mühle für ein Mahlen insbesondere von Teeblättern kann jedoch diese sich horizontal durch den Mahlscheibenträger erstreckende Exzenterwelle den Durchlass des Mahlgutes behindern.

Der Erfindung liegt die Aufgabe zugrunde, ein Verfahren für das Erzeugen eines Getränks, vorzugsweise zum Brühen von Tee, zu schaffen, mittels dem eine vorzügliche Getränkegeschmacksentfaltung erzielt wird, ohne dass vom Zeitpunkt des Auslösens des Teebezugs mit dem Mahlen, dem anschliessenden Extrahiervorgang bis zum Füllen des Behälters, zum Beispiel einer Tasse, erheblich länger Zeit benötigt wird.

Diese Aufgabe ist erfindungsgemäss durch die Merkmale der Ansprüche 1, 10 und 15 gelöst.

Erfindungsgemäss erfolgt beim Brühprozess nach dem Zuführen des Teepulvers sowie des heissen Wassers in die Brühkammer ein Brühen als erste Brühphase und danach eine Ruhephase während einer bestimmten Zeitdauer in der Brühkammer und anschliessend wird das gebrühte Teegetränk zum Auslass geleitet. Es folgt dann zumindest eine zweite Brühphase durch die Zuführung von kaltem, warmem oder heissem Wasser in die Brühkammer mit dem darin verbliebenen Teepulver und es wird dann das gebrühte Teegetränk nochmals mit einer Ruhephase während einer bestimmten Verweilzeit in der Brühkammer gelassen und anschliessend ebenfalls zum Auslass geleitet.

Mit diesem erfindungsgemässen Brühprozess kann durch eine sehr effiziente Art und Weise ein sehr geschmacksvolles Teegetränk erzeugt werden, und dies unabhängig von der Teesorte und der Beschaffenheit der Teeblätter.

Nach dem Brühen und dem Auslassen des extrahierten Teegetränks wird die Brühkammer geöffnet und das verbrauchte Teepulver in einen Auffangbehälter geleitet.

Sehr vorteilhaft erfolgt anschliessend mindestens ein Rückspülen von Spülwasser vom Auslass her in die wieder geschlossene Brühkammer. Die durch dieses Rückspülen gelösten Teepulverreste und das Spülwasser werden durch ein nochmaliges Öffnen der Brühkammer ebenfalls vorzugsweise in den Auffangbehälter befördert.

Mit diesem Rückspülen kann gewährleistet werden, dass die Brüheinrichtung für die Durchführung des Verfahrens nach jedem Brühvorgang stets wieder in den erforderlichen gereinigten Zustand gebracht wird, weil das Teepulver beim Brühen dazu neigt, dass es an den Innenwänden der Brühkammer haften bleibt.

Weiterhin wird vorteilhaft nach dem Rückspülen ein Vorwärtsspülen in der im geschlossenen Zustand befindlichen Brühkammer durchgeführt, bei dem Spülwasser wie beim Brühen via den ersten Kolben in die Brühkammer geleitet und dann beim Auslass als Abwasser weggeführt wird.

Mit dem erfindungsgemässen Verfahren wird bei jeder der mindestens zwei Brühphasen jeweils eine solche Wassermenge in die Brühkammer gesteuert zugeführt, dass ein Behälter beim Auslass, wie zum Beispiel eine Teetasse, in zwei oder mehreren Teilfüllungen je nach Anzahl der Brühphasen mit Unterbrüchen gefüllt wird, dies bis die vorgegebene Gesamtmenge in dem Behälter erreicht ist.

Die Brüheinrichtung für die Durchführung des oben erläuterten Verfahrens ist mit einem axial verschiebbaren Zylinder mit wenigstens einer Einfüllöffnung für das Teepulver und zwei in diesem eine verschliessbare Brühkammer bildenden, relativ zueinander verschiebbaren Kolben versehen. Wenigstens durch den ersten Kolben führt eine Zufuhrleitung für heisses Wasser und der andere zweite Kolben ist aus einem Sieb gebildet und mit einem Auslass fluidverbunden. Das vorzugsweise frisch gemahlene Teepulver ist in diese Brühkammer zuführbar und der erste Kolben ist gegen den zweiten Kolben zumindest teils innerhalb des Zylinders verschiebbar.

Die Erfindung sieht vor, dass ein Steuerventil in der Zufuhrleitung für das heisse Wasser durch den ersten Kolben und ein Steuerventil in der Leitungsverbindung zum Auslass von einer Steuerungseinheit betätigbar sind. Es wird beim Starten des Brühens zuerst Teepulver und dann heisses Wasser in bestimmten Mengen in die Brühkammer geleitet und basierend auf der von der Steuerungseinheit erfassten vorgegebenen Zeitdauer einer jeweiligen Ruhephase des gebrühten Teegetränks der Brühprozess entsprechend gesteuert.

Zweckmässigerweise ist der Brüheinrichtung eine Mühle mit mindestens zwei zusammenwirkenden Mahlscheiben zugeordnet, die zum Mahlen insbesondere der in einen Teebehälter eingefüllten Teeblätter dienen, von denen vorzugsweise die eine Mahlscheibe durch einen Antrieb rotierbar ist, wobei die gemahlenen Teeblätter als Teepulver durch diese wenigstens eine Einfüllöffnung des Zylinders in diese Brühkammer führbar sind.

Erfindungsgemäss verläuft der mit einer sich nach unten verjüngenden Trichterform ausgebildete Teebehälter in einen Mühlenraum und von diesem zu den Mahlscheiben, von denen die rotierbare Mahlscheibe mit einem Mischorgan drehverbunden ist, welches sich durch diesen Mühlenraum vorzugsweise oben bis in den Teebehälter erstreckt und beim Mahten zusammen mit der einen Mahlscheibe eine Rotationsbewegung ausführt, durch welche die Teeblätter gerührt und für das nachfolgende Mahlen mahlgerecht ausgerichtet werden.

Die Erfindung sowie weitere Vorteile derselben sind nachfolgend anhand von Ausführungsbeispielen unter Bezugnahme auf die Zeichnung näher erläutert. Es zeigt:
- Fig. 1: bis Fig. 4 je einen Längsschnitt einer Brüheinheit insbesondere von Teepulver in vier verschiedenen Positionen für die Durchführung des erfindungsgemässen Verfahrens;
- Fig. 5: einen Längsschnitt durch eine Mühle mit einem oberseitigen Teebehälter;
- Fig. 6: einen teilweisen vergrösserten Längsschnitt durch die Mühle; und
- Fig. 7: ein hydraulisches Schema der Brüheinheit mit der Zufuhrleitung des Wassers, dem Auslass des Teegetränks und den Steuerventilen einer Steuerungseinheit.

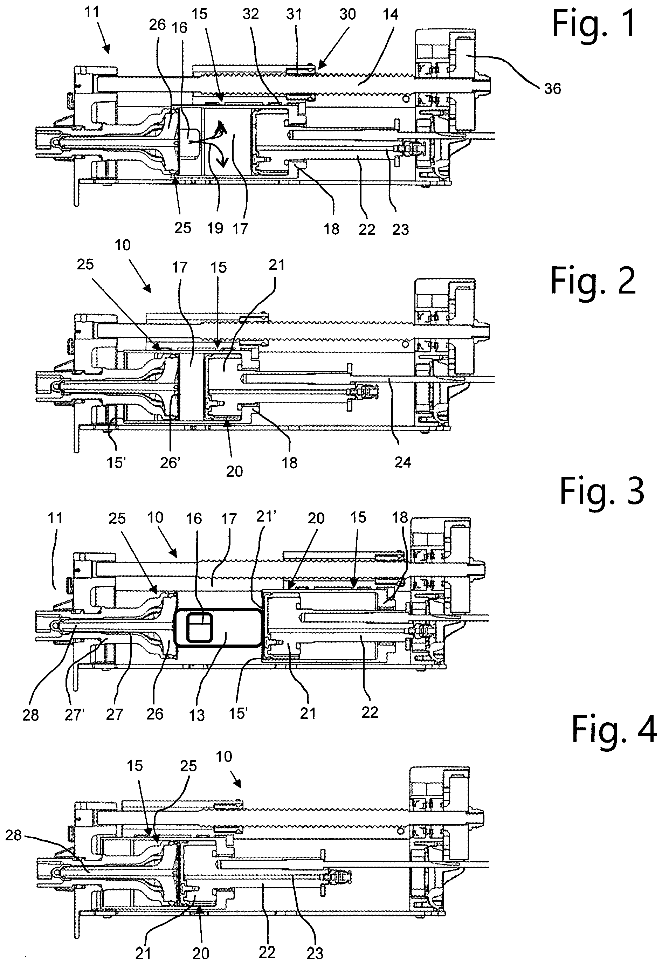

Fig. 1 bis Fig. 4 zeigen eine Brüheinheit 10 einer Brüheinrichtung, die insbesondere für ein Extrahieren von Teepulver ausgebildet ist. Die Brüheinrichtung kann in einem unabhängigen Gerät, in einer Kaffeemaschine oder in einem Getränkeautomat integriert sein und sie hat mindestens einen Auslass, bei dem das Getränk in einen Behälter 35, wie zum Beispiel in einen Teekrug, eine Tasse oder dergleichen, eingefüllt werden kann.

Für das zu erzeugende Getränk kann nebst den bekannten Teesorten eine Mischung aus Tee- und anderen Blättern oder Geschmackspulvern verwendet werden. Selbstverständlich kann dem erzeugten Tee mit üblichen Geschmackszusätzen, wie Zitronen- oder anderen Säften, Rum oder anderen, maschinell oder von Hand vermischt werden.

Mit der Brüheinrichtung können selbstverständlich auch andere Pulver oder pulverähnliche Brühmaterialien verwendet werden, wie Pulver aus Kaffee, Cascara, Lupinen, medizinischen Kräutern usw. oder aus Mischungen daraus. Das Brühen erfolgt vorteilhaft mit heissem Wasser, es kann aber ebenso mit kaltem oder warmem Wasser erfolgen.

Diese Brüheinheit 10 der Brüheinrichtung ist mit einem axial verschiebbaren Zylinder 15 mit wenigstens einer Einfüllöffnung 16 für das Teepulver und/oder andere Pulver und zwei in diesem eine verschliessbare Brühkammer 17 bildenden, relativ zueinander verschiebbaren Kolben 20, 25 versehen. Der Zylinder 15 ist von einem Linearantrieb 30 verstellbar in einem angedeuteten Rahmengehäuse 11 der Brüheinheit 10 gelagert. Beim Linearantrieb 30 ist eine drehbar gelagerte Spindel 14 mit einer darauf gelagerten Mutter 31 vorgesehen, die mit dem Zylinder 15 durch ein Verbindungselement 32 gekoppelt ist. Bei einem Drehen der von einem Antrieb steuerbar rotierbaren Spindel 14 wird die Mutter 31 zusammen mit dem Zylinder 15 in die entsprechend angesteuerte Position verstellt.

Der erste Kolben 20 ist mit einem im Zylinder 15 gelagerten Kolbenkopf 21 und einem Kolbenschaft 22 versehen. Der Zylinder 15 weist einen den Kolbenkopf 21 umgreifenden Hülsenkragen 18 auf, der auf dem Kolbenschaft 22 verstellbar gelagert ist. Durch diesen ersten Kolben 20 führt eine Zufuhrleitung 23 für heisses Wasser für das Brühen, die frontseitig beim Kolbenkopf 21 in die Brühkammer 17 mündet. Ferner ist im Kolbenschaft 22 noch eine Heizpatrone 24 integriert, mittels der ein Vorheizen des Kolbens 20 und damit auch der Brühkammer bewirkt wird. Bei einer einfacheren Ausführung könnte jedoch auf diese Heizpatrone verzichtet werden.

Der zum ersten Kolben 20 gegenüberliegende zweite Kolben 25 ist stationär im Rahmengehäuse 11 der Brüheinheit 10 angeordnet und weist ein an die Brühkammer 17 angrenzendes Sieb 26', ein dieses haltender Kolbenkopf 26, einen Kolbenschaft 27 und eine mit einem Auslass 33 fluidverbundene Auslassleitung 28 auf. Dieser zweite Kolben 25 ist von einem isolierenden Aussenmantel 27' umfasst. Selbstverständlich könnte er anders als dargestellt ausgestaltet sein, zum Beispiel ohne diesen Aussenmantel.

Erfindungsgemäss erfolgt das Verfahren zum Erzeugen des Teegetränks in folgenden Schritten:
> es erfolgt ein Zuführen durch die Einfüllöffnung 16 beim Zylinder 15 und Verpressen des angedeuteten Teepulvers 19 sowie des heissen Wassers durch die Zufuhrleitung 23 in die Brühkammer 17, und
> es folgt ein Brühen als erste Brühphase,
> danach folgt eine Ruhephase des extrahierten Teegetränks in der Brühkammer 17 während einer bestimmten Zeitdauer und
> folglich wird das gebrühte Teegetränk zum Auslass 33 geleitet,
> es folgt dann zumindest eine zweite Brühphase durch die erneute Zuführung von heissem Wasser durch die Zufuhrleitung 23 in die Brühkammer 17 mit dem darin verbliebenen Teepulver,
> und der gebrühte Tee wird nochmals mit einer Ruhephase während einer bestimmten Verweilzeit in der Brühkammer 17 gelassen,
> und anschliessend wird das Teegetränk ebenfalls zum Auslass 33 geleitet.

Diese Brüh- und Ruhephasen können im Rahmen der Erfindung je nach den Gegebenheiten mehr als zweimal wiederholt werden, bei denen mit dem gleichen Prozedere jeweils heisses, kaltes oder warmes Wasser in die Brühkammer 17 zugeführt und das darin verbleibende Teepulver wiederholt aufgebrüht, dann für ein Ziehen darin belassen und das so extrahierte Teegetränk ausgelassen wird. Dies erfolgt vorzugsweise bei einem geschlossenem Auslass 33. Eine solche zumindest dritte Brüh- und Ruhephase kann gesteuert ausgelöst werden, wenn zum Beispiel eine grössere Menge als bei einer Tasse angefordert wird.

Die jeweiligen Zeitspannen der Ruhephasen nach den Brühphasen sind gleich oder unterschiedlich lang festgelegt. So kann bei mindestens zwei Brühphasen die erste Ruhephase mit einer kürzeren Zeitspanne als die zweite gesteuert erfolgen, weil bei der ersten Ruhephase eine schnellere Extraktion des frisch eingefüllten Teepulvers als bei der zweiten Brühphase erfolgt. Bei diesen Zeitspannen kann es sich beim Brühen um Sekunden handeln, dies bis das heisse Wasser das Pulver durchtränkt hat, hingegen das Ziehenlassen bzw. die Ruhephase kann je nach Einstellung beispielsweise von 10 Sekunden bis zu einer Minute dauern.

Bei jeder der mindestens zwei Brühphasen beim Brühprozess wird jeweils eine solche Wassermenge gesteuert zugeführt, dass ein Behälter 35 beim Auslass, wie zum Beispiel eine Teetasse, in zwei oder mehreren Teilfüllungen je nach Anzahl der Brühphasen mit Unterbrüchen gefüllt wird, dies bis die vorgegebene Gesamtmenge in dem Behälter erreicht ist. Im Prinzip könnte auch nach den durchgeführten Brühphasen das Teepulver entfernt und nochmals neues Teepulver zugeführt und dann die Brühphasen wiederholt werden, bis der Behälter 35 gefüllt ist.

Nach dem letzten des zwei- oder mehrmaligen Brühens und Auslassens des extrahierten Teegetränks wird die Brühkammer 17 geöffnet und das verbrauchte Teepulver in einen nicht näher gezeigten Auffangbehälter geleitet. Anschliessend erfolgt mindestens ein Rückspülen von Spülwasser vom Auslass her durch den zweiten Kolben 25 in die wieder geschlossene Brühkammer 17, bei der die beiden Kolben annähernd wie beim Brühen positioniert sind. Die durch das Rückspülen gelösten Teepulverreste und das eingelassene Spülwasser werden durch ein Öffnen der Brühkammer 17 ebenfalls vorzugsweise in den Auffangbehälter geleitet.

Es könnte auch so gehandhabt werden, dass ein jeweiliges Rückspülen durch mehrere Druckstösse oder dergleichen von Spülwasser erfolgen könnte und/oder dass ein solches Rückspülen nicht nach jedem abgeschlossenen Füllen des Behälters durchgeführt wird, sondern nach einer bestimmten Anzahl von gefüllten Behältern nach je einem mehrfachen Brühen und Ruhen, welche erfahrungsgemäss festgelegt werden könnte.

Nach dem Rückspülen wird vorteilhaft ein Vorwärtsspülen in der im geschlossenen Zustand befindlichen Brühkammer 17 durchgeführt, bei dem Spülwasser wie beim Brühen vom ersten Kolben 20 in und durch die Brühkammer 17 geleitet und dann durch die Auslassleitung 28 des Kolbens 25 und eine Abwasserleitung 39 in ein Auffanggefäss 41 weggeführt wird. Auch das Vorwärtsspülen könnte durch mehrere Druckstösse von Spülwasser oder dergleichen und/oder nicht nach jedem abgeschlossenen Füllen des Behälters durchgeführt werden, sondern ebenso nach einer bestimmten Anzahl von Behälterfüllungen.

Als Darstellung der einzelnen Verfahrensschritte ist dies in Fig. 1 bis Fig. 4 wie folgt verdeutlicht:
Fig. 1 zeigt die Offenstellung der Brüheinheit 10, bei der dieser Zylinder 15 mit seinem vorderen Ende 15' bis über den zweiten Kolben 25 gestülpt ist, während der erste Kolben 20 am hinteren Hülsenkragen 18 des Zylinders 15 anstösst und die in die Brühkammer 17 ragende Einfüllöffnung 16 in der Zylinderwandung vor dem zweiten Kolben 25 platziert ist. Diese Einfüllöffnung 16 schliesst eingangsseitig an die nicht näher gezeigte Auslassöffnung der Mühle 50 an, so dass frisch gemahlenes Teepulver 19 dosiert zugeführt werden kann.

Fig. 2 zeigt die Brühstellung der Brüheinheit 10 mit dem eingefüllten Teepulver 19. Der Zylinder 15 ist zusammen mit dem ersten Kolben 20 gegen den zweiten Kolben 25 derartig vorgeschoben, dass das Teepulver 19 dazwischen ohne ein Verpressen befindlich ist, oder es verpresst werden kann, wobei wenn ein Verpressen des Teepulvers in der Brühkammer vor und während dem Brühen mit einem geringen Druck gesteuert erfolgen soll, soll der Druck gering sein und annähernd dem Atmosphärendruck entsprechen, aber je nach Anwendung kann er auch höher eingestellt werden. Der Zylinder 15 ist mit seinem vorderen Ende 15' bis zum Aussenumfang des zweiten Kolben 25 soweit vorgeschoben, dass die Einfüllöffnung 16 von diesem verdeckt ist. Der erste Kolben 20 stösst am hinteren Hülsenkragen 18 des Zylinders 15 an und ist von diesem in die Verpressposition vorgeschoben worden.

Nach dem erfindungsgemässen Verfahren mit den Brüh- und Ruhephasen in dieser Brühstellung sind gemäss Fig. 3 der Zylinder 15 und der erste Kolben 20 in dem Rahmengehäuse 11 der Brüheinheit 10 zurückgezogen, die Brühkammer 17 ganz geöffnet und das verbrauchte Teepulver kann nach unten zum Beispiel in einen Auffangbehälter hineinfallen. Der Zylinder 15 ist dabei gegenüber dem ersten Kolben 20 soweit zurückverschoben, dass die vordere Stirnseite 21' des Kolbenkopfs 21 zumindest bis zum vorderen Ende 15' des Zylinders ragt, damit allenfalls verbleibende Pulverreste innenseitig des Zylinders vom Kolben 20 rausgeschoben werden. Ferner ist noch die Einfüllöffnung 16 bei einem Rahmenteil 13 seitlich beim Rahmengehäuse 11 ersichtlich.

Fig. 4 zeigt die Brüheinheit 10 in der vordersten Position des Zylinders 15 und des ersten Kolbens 20, bei der die beiden Kolben 20, 25 stirnseitig in Berührung stehen. In dieser Position erfolgt vorteilhaft das Vorwärtsspülen, bei dem Spülwasser durch die Zufuhrleitung 23 des ersten Kolbens 20, durch das zu reinigende Sieb 26' und die Auslassleitung 28 des Kolbens 25 und folglich in eine Abwasserleitung 39 und in ein Auffanggefäss 41 geleitet wird.

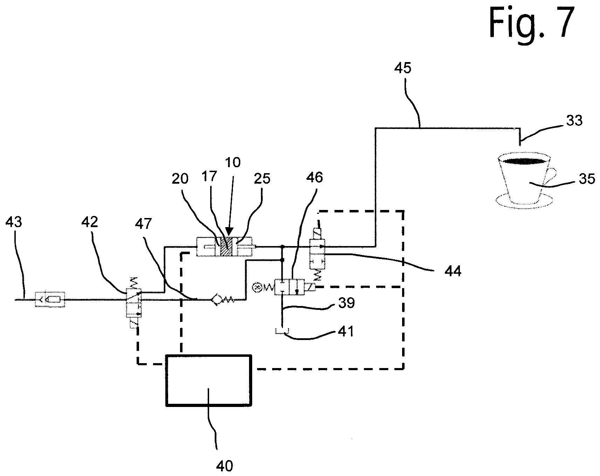

Fig. 7 verdeutlicht die Steuerung des Verfahrens nach der Erfindung, bei der ein Steuerventil 42 in der Zufuhrleitung 43 für das heisse Wasser und ein Steuerventil 44 in der Leitungsverbindung 45 zum Auslass 33 von einer Steuerungseinheit 40 betätigbar sind, durch welche das Starten des Brühens des mit bestimmten Mengen in die Brühkammer 17 der Brüheinheit geleiteten Teepulvers und dem heissen Wasser und basierend auf der von ihr erfassten vorgegebenen Zeitdauer einer jeweiligen Rühr- bzw. Ruhephase des zu erzeugenden Teegetränks der Brühvorgang entsprechend steuerbar bzw. regelbar ist.

Das Steuerventil 42 für die Wasserzufuhr wird beim Rückspülen derart von der Steuerungseinheit 40 geschaltet, dass das Wasser via eine Rückspülleitung 47 durch den zweiten Kolben 25 in die Brühkammer 17 zuführbar ist, wobei die Brühkammer vom geschlossenen Zustand durch axiales Verschieben des Zylinders 15 von der Steuerungseinheit 40 in eine geöffnete Position verstellbar ist, um die beim Rückspülen gelösten Teepulverreste und das zugeführte Spülwasser vorzugsweise in den Auffangbehälter abzulassen.

Beim Vorwärtsspülen bei geschlossener Brühkammer, wie in Fig. 4 gezeigt ist, wird das Steuerventil 42 in der Zufuhrleitung 43 für das Spülwasser und ein Steuerventil 46 einer Leitungsverbindung 39 zu einem Auffangbehälter 41 von der Steuerungseinheit 40 geöffnet, nicht aber das Steuerventil 44 zum Auslass, um eine bestimmte Wassermenge durch die Kolben 20, 25 durchzulassen und im Auffangbehälter 41 aufzunehmen.

Als weitere Variante könnte während der Ruhephase, bei dem das Wasser in der Brühkammer 17 verweilt, eine Zirkulation des Wassers von der Brühkammer durch eine Pumpe und wieder zurück in dieselbe erfolgen, um das Extrahieren des Getränks zu verstärken.

In der Zufuhrleitung 43 für das Wasser ist vorteilhaft ein Stellglied für die Zufuhrmenge des Wassers und vorzugsweise mehrere Drucksensoren in der Brühkammer 17 angeordnet, um den Druck des Mediums beim Brühen zu ermitteln und an die Steuerungseinheit 40 für einen Vergleich mit einem Sollwert zu senden, wobei das Stellglied bei Abweichung des Solldrucks entsprechend ansteuerbar ist, um konstante Druckverhältnisse beim Brühen in der Brühkammer zu erreichen. Bei dem Stellglied kann es sich um ein Proportionalventil, um ein anderes mengenregulierendes Element, um eine volumengesteuerte Pumpe oder ähnlichem handeln. Ein solches Stellglied eignet sich vorteilhaft auch für ein Brühen von Kaffee.

Die Volumen der in der Brühposition befindlichen Brühkammer 17 sowie des darin eingefüllten Teepulvers und des Wassers sind für das Brühen in einem bestimmten Verhältnis zueinander vorgegeben, welche von der Steuerungseinheit 40 erfasst werden und durch diese das Steuerventil 42 in der Zufuhrleitung 43 für das heisse Wasser sowie ein Schliessventil in einer Durchgangsöffnung für die Zufuhr des Teepulvers in die wenigstens eine Einfüllöffnung 16 im Zylinder 15 betätigbar sind. Die Menge des Teepulvers kann aber auch durch die Zeitdauer des Mahlens festgelegt werden.

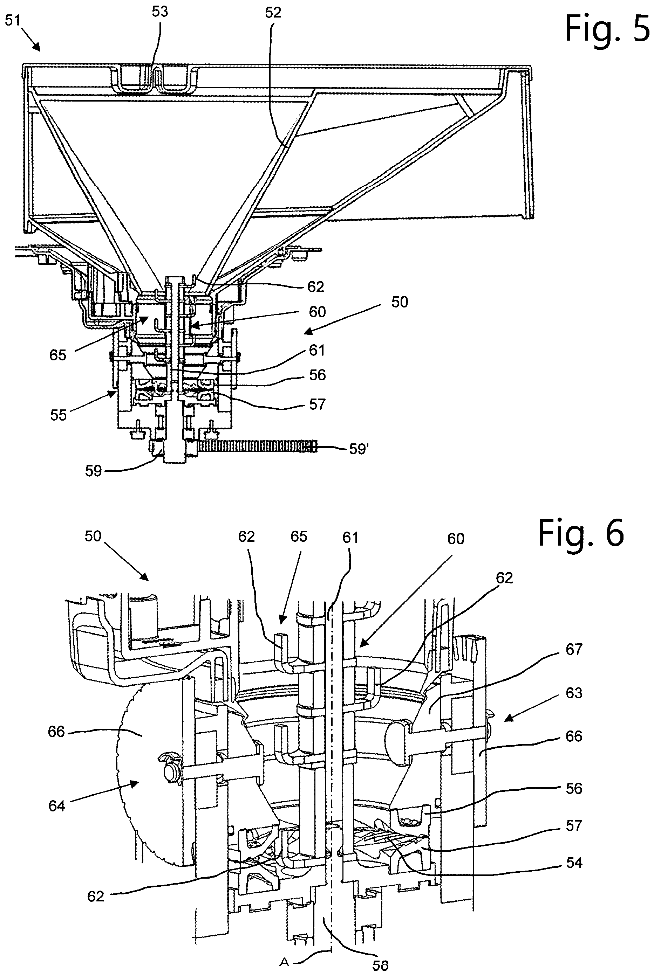

Fig. 5 und Fig. 6 zeigen eine Mühle 50 der Brüheinrichtung, die zum Mahlen insbesondere der in einen Teebehälter 51 eingefüllten Teeblätter dient. Sie umfasst ein Mühlengehäuse 55, auf dem der Teebehälter 51 lösbar befestigt drauf gesetzt ist und in dem zwei zusammenwirkende Mahlscheiben 56, 57 gelagert sind, von denen die untere Mahlscheibe 57 durch einen Drehmotor mit einer Antriebswelle 58 rotierbar ist, bei der ein Ritzel 59 und ein Zahnriemen 59' für die Verbindung mit dem Drehmotor ersichtlich sind. Der Teebehälter 51 ist mit einer sich nach unten verjüngenden Trichterform 52 ausgebildet, die in einen Mühlenraum 65 und von diesem zu den unterseitig angeordneten Mahlscheiben 56, 57 führt. Die Trichterform 52 ist vorzugsweise mit einem steilen Winkel gegenüber der Vertikalen ausgebildet, zum Beispiel zwischen 15 und 30°, damit sich die Teeblätter gleichmässig nach unten absenken und nicht darin hängen bleiben.

Diese Mühle 50 ist erfindungsgemäss mit einem Mischorgan 60 versehen, das mit der rotierbaren Mahlscheibe 57 drehbar verbunden ist, wobei sich dieses durch den Mühlenraum 65 vorzugsweise oben bis in den unteren Teil des Teebehälters 51 erstreckt und beim Mahlen zusammen mit der einen Mahlscheibe 57 die Rotationsbewegung ausführt. Dieses Mischorgan 60 könnte auch durch einen separaten Antrieb bzw. eine im Mühlengehäuse 55 vorgesehene Lagerung drehbar angeordnet sein.

Mit diesem Mischorgan 60 können die in den Teebehälter 51 und im Mühlenraum 65 eingefüllten Teeblätter durch einen Mischvorgang voneinander gelöst und für das nachfolgende Mahlen mahlgerecht ausgerichtet werden. Damit werden die Teeblätter optimal nach unten zwischen die Mahlscheiben geleitet. Dies minimiert den Widerstand bzw. fördert einen reibungslosen Übergang und den Zufluss innenseitig in die Mahlscheiben. Die rotierbare Mahlscheibe 57 und damit dieses Mischorgan 60 können beispielsweise mit einer Drehzahl von bis zu 1'000 Umdrehungen pro Minute gedreht werden.

Dieses Mischorgan 60 besteht aus einer koaxial zur Mahlscheibe 57 verlaufenden und mit der Antriebswelle 58 verbundenen Drehwelle 61 mit entlang an ihrem Umfang verteilt vorstehenden Mitnehmerelementen 62. Diese Mitnehmerelemente 62 sind jeweils als hakenförmige, radial nach aussen verlaufender Greifer ausgebildet, die jeweils übereinander und in einem Winkel von 180° zueinander versetzt angeordnet sind. Sie sind dabei so entlang der vertikalen Drehwelle 61 angeordnet, dass je ein Mitnehmerelement 62 nach dem andern folgt. Selbstverständlich könnten sie anders als gezeigt ausgestaltet sein, wie zum Beispiel als wegragende gerade oder gekrümmte Bolzen oder in der Art eines Schneckenförderers. Der Mühlraum 65 ist im Durchmesser breit genug bemessen, damit sich die Teeblätter sukzessive nach unten bewegen.

Die zusammenwirkenden Mahlscheiben 56, 57 sind von einem Verstellmechanismus 63, 64 gegeneinander entlang der Rotationsachse A verstellbar, um den Mahlgrad des durch diese geschnittenen Mahlguts zu verändern. Dieser vorzugsweise auf gegenüberliegenden Seiten des Mühlengehäuses 55 mit Verstellmitteln 66 versehener Verstellmechanismus 63, 64 weist einen Hülsenkörper 67 im Mühlenraum 65 auf, an dem unterseitig die fixe Mahlscheibe 56 auswechselbar befestigt ist. Durch ein manuelles Drehen zumindest des einen Verstellmittels 66 wird via einen nicht näher gezeigten Exzenter der Hülsenkörper 67 und mit ihm die Mahlscheibe 56 in Richtung der Rotationsachse A verstellt. Dieses Justieren des Mahlgrades könnte auch durch eine elektrische Steuerung erfolgen, was aber nicht gezeigt ist.

Die bestimmten Zufuhrmengen des Teepulvers in die Brüheinheit 10 kann durch die Zeitdauer des Mahlens reguliert werden, aber es könnte auch ein Mengenregler mittels einer Klappe, einem Schieber oder dergleichen vorgesehen sein.

Die im Querschnitt U-förmigen, als Ringe ausgebildeten Mahlscheiben 56, 57 sind jeweils mit einer Vielzahl von Zähnen 54 bei ihren einander zugekehrten Stirnflächen annähernd radial ausgerichtet. Die Zähne 54 sind mit scharfen Schneiden versehen, damit die Teeblätter geschnitten und nicht zerquetscht werden. Diese annähernd radial ausgerichteten Zähne 54 sind jeweils entlang ihrer Schneidfläche leicht gerundet geformt und sie sind in bestimmten Abständen aneinandergereiht. Zweckmässigerweise bilden diese Schneidflächen zusammen im Querschnitt gesehen einen V-förmigen Einlauf, damit die Teeblätter vom Mahlraum 65 nach aussen mitgenommen werden. Die Mahlscheiben 56, 57 sind so konzipiert, dass sie während des Mahlvorgangs nur minimale Reibwärme erzeugen. Dies ist wichtig, um die empfindlichen Aromen und ätherischen Öle der Teeblätter zu erhalten.

Der mit dieser sich nach unten verjüngenden Trichterform ausgebildete Teebehälter 51 ist oberseitig mit einer wegnehmbaren Schutzabdeckung 53 zum Beispiel mit einer Gitterstruktur versehen, die bewirkt, dass das Bedienpersonal beim Beschicken von Teeblättern mit den Fingern nur beschränkt in den Teebehälter hineinlangen kann, damit er nicht das drehende Mischorgan berühren kann.

Die Erfindung ist mit den obigen Ausführungsbeispielen ausreichend dargetan. Sie könnte aber noch durch weitere Varianten erläutert bzw. veranschaulicht sein. So können bei den vorgesehenen Leitungen auch Leitungssysteme mit mehreren Teilleitungen vorgesehen sein. Auch ist bei dem Medium als Wasser sowohl kaltes, warmes oder heisses Wasser verwendbar, und es besteht nicht eine Einschränkung auf heisses Wasser, auch wenn an sich heisses Wasser angegeben ist. Genauso verhält es sich bei der Angabe von Tee als Pulver bzw. Getränk, bei dem es sich um andere Stoffe, wie Kaffee etc. handeln kann.

## Patentansprüche

1. Verfahren zum Erzeugen eines Getränks, vorzugsweise zum Brühen von Tee, bei dem gemahlene Teeblätter als Teepulver (19) oder ein anderes Pulver in eine Brühkammer (17) geleitet werden und Wasser für den Brühprozess zugegeben, und das extrahierte Getränk vorzugsweise zu einem Auslass (33) befördert wird, **dadurch gekennzeichnet, dass** das Verfahren zum Erzeugen des Getränks in folgenden Schritten abläuft:
> es erfolgt ein Zuführen des Pulvers (19) durch die Einfüllöffnung (16) beim Zylinder (15) sowie dem Zuführen des Wassers durch die Zufuhrleitung (23) in die geschlossene Brühkammer (17), und
> es folgt ein Brühen als erste Brühphase,
> danach folgt eine Ruhephase des extrahierten Getränks in der Brühkammer (17) während einer bestimmten Zeitdauer, und
> wobei das gebrühte Getränk zum Auslass (33) geleitet wird,
> es folgt dann zumindest eine zweite Brühphase durch die erneute Zuführung von Wasser durch die Zufuhrleitung (23) in die Brühkammer (17) mit dem darin verbleibenden Pulver,
> und das gebrühte Getränk wird nochmals mit einer Ruhephase während einer bestimmten Verweilzeit in der Brühkammer (17) gelassen,
> und anschliessend wird das Getränk ebenfalls zum Auslass geleitet.

2. Verfahren nach Anspruch 1, **dadurch gekennzeichnet, dass** nach dem Brühen und dem Auslassen des extrahierten Teegetränks die Brühkammer (17) geöffnet und das verbrauchte Teepulver in einen Auffangbehälter geleitet wird, und dass anschliessend mindestens ein Rückspülen von Spülwasser vom Auslass her in die wieder geschlossene Brühkammer (17) erfolgt, und dass die durch das Rückspülen gelösten Teepulverreste und das eingelassene Spülwasser durch ein Öffnen der Brühkammer (17) ebenfalls vorzugsweise in den Auffangbehälter befördert werden.

3. Verfahren nach Anspruch 1 oder 2, **dadurch gekennzeichnet, dass** vorzugsweise nach dem Rückspülen ein Vorwärtsspülen in der im geschlossenen Zustand befindlichen Brühkammer (17) erfolgt, bei dem Spülwasser durch die Brühkammer geleitet und dann beim Auslass als Abwasser weggeführt wird.

4. Verfahren nach Anspruch 2 oder 3, **dadurch gekennzeichnet, dass** das Wasser beim Rückspülen durch einen aus einem Sieb (26') gebildeten, für das Auslassen der Teeflüssigkeit nach dem Brühen vorgesehenen zweiten Kolben (25) in die Brühkammer (17) zugeführt wird, wobei die Brühkammer im geschlossenen Zustand durch diesen Kolben (25), einen diesen umgebenden verschiebbaren Zylinder (15) und einen in diesem teils geführten ersten Kolben (20) gebildet ist, wobei letzterer mit der Zufuhrleitung (23) des Wassers ausgebildet und relativ zum andern Kolben (25) bewegbar ist.

5. Verfahren nach Anspruch 3 oder 4, **dadurch gekennzeichnet, dass** beim Vorwärtsspülen eine bestimmte Menge Wasser durch den ersten Kolben (20) mit der Wasserzufuhr für das Brühen in die Brühkammer (17) geleitet und dann durch den mit dem Sieb (26') versehenen oder gebildeten zweiten Kolben (25) und als Abwasser weggeführt wird.

6. Verfahren nach einem der Ansprüche 1 bis 5, **dadurch gekennzeichnet, dass**
die jeweiligen Zeitspannen der Ruhephasen nach den jeweiligen Brühphasen jeweils gleich oder unterschiedlich lang festgelegt sind.

7. Verfahren nach einem der Ansprüche 1 bis 6, **dadurch gekennzeichnet, dass**
bei jeder der mindestens zwei Brühphasen jeweils eine solche Wassermenge gesteuert in die Brühkammer (17) zugeführt wird, dass ein Behälter (35) beim Auslass, wie zum Beispiel eine Teetasse, in zwei oder mehreren Teilfüllungen je nach Anzahl der Brühphasen mit Unterbrüchen gefüllt wird, dies bis die vorgegebene Gesamtmenge in dem Behälter (35) erreicht ist.

8. Verfahren nach einem der Ansprüche 1 bis 7, **dadurch gekennzeichnet, dass**
wenn ein Verpressen des Teepulvers in der Brühkammer (17) vor und während dem Brühen mit einem geringen Druck gesteuert erfolgt, dass dann dieser Druck annähernd dem Atmosphärendruck entspricht.

9. Verfahren nach einem der Ansprüche 1 bis 8, **dadurch gekennzeichnet, dass**
während der Ruhephase, bei dem das Wasser in der Brühkammer (17) verweilt, eine Zirkulation des Wassers von der Brühkammer durch eine Pumpe und wieder zurück in dieselbe erfolgt, um das Extrahieren des Getränks zu verstärken.

10. Brüheinrichtung zur Durchführung des Verfahrens nach einem der Ansprüche 1 bis 9, die mit einem axial verschiebbaren Zylinder (15) mit wenigstens einer Einfüllöffnung (16) für das Teepulver und zwei in diesem eine verschliessbare Brühkammer (17) bildenden, relativ zueinander verschiebbaren Kolben (20, 25) versehen ist, von denen wenigstens der erste Kolben (20) an eine Zufuhrleitung für Wasser angeschlossen und der andere zweite Kolben (25) ein Sieb (26') aufweist und mit einem Auslass (33) fluidverbunden ist, wobei insbesondere das Teepulver in diese Brühkammer (17) zuführbar und wenigstens der erste gegen den zweiten Kolben zumindest teils innerhalb des Zylinders (15) verschiebbar ist, **dadurch gekennzeichnet, dass**
ein jeweiliges Steuerventil (42) in der Zufuhrleitung (43) für das Wasser durch den ersten Kolben (20) und in der Leitungsverbindung (45) zum Auslass von einer Steuerungseinheit (40) betätigbar ist, durch welche beim Starten des Brühens Pulver und heisses Wasser in bestimmten Mengen in die Brühkammer (17) zuführbar und basierend auf der von der Steuerungseinheit (40) erfassten vorgegebenen Zeitdauer einer jeweiligen Ruhephase des gebrühten Getränks der Brühprozess entsprechend gesteuert wird.

11. Brüheinrichtung nach Anspruch 10, **dadurch gekennzeichnet, dass** das Steuerventil (42) für die Wasserzufuhr beim Rückspülen derart von der Steuerungseinheit (40) geschaltet ist, dass das Wasser durch den zweiten Kolben (25) via eine Rückspülleitung (47) in die Brühkammer (17) zuführbar ist, wobei die Brühkammer vom geschlossenen Zustand durch axiales Verschieben des Zylinders (15) von der Steuerungseinheit (40) in eine geöffnete Position verstellbar ist, um die beim Rückspülen gelösten Teepulverreste und das zugeführte Spülwasser vorzugsweise in den Auffangbehälter zu spülen.

12. Brüheinrichtung nach Anspruch 10 oder 11, **dadurch gekennzeichnet, dass**
bei einem Vorwärtsspülen bei geschlossener Brühkammer (17) Steuerventile (42, 46) in der Zufuhrleitung (43) für das heisse Wasser und der Leitungsverbindung (39, 45) von der Steuerungseinheit (40) geöffnet sind, um eine bestimmte Wassermenge durch die Kolben (20, 25) durchzulassen und vorzugsweise in einem Auffangbehälter (41) aufzunehmen.

13. Brüheinrichtung nach einem der Ansprüche 10 bis 12, **dadurch gekennzeichnet, dass**
bei der Zufuhrleitung (43) für das heisse Wasser ein Stellglied für die Zufuhrmenge des Wassers und vorzugsweise mehrere Drucksensoren in der Brühkammer (17) angeordnet sind, um den Druck beim Brühen zu ermitteln und an die Steuerungseinheit (40) für einen Vergleich mit einem Sollwert zu senden, wobei dieses Stellglied bei Abweichung entsprechend ansteuerbar ist, um stets kontrollierte Druckverhältnisse beim Brühen in der Brühkammer (17) zu erreichen, wobei sich dies insbesondere für das Brühen von Kaffee eignet.

14. Brüheinrichtung nach einem der Ansprüche 10 bis 13, **dadurch gekennzeichnet, dass**
die Volumen der in der Brühposition befindlichen Brühkammer (17) sowie des darin eingefüllten Teepulvers und des Wassers für das Brühen in einem bestimmten Verhältnis zueinander vorgegeben sind, welche von der Steuerungseinheit (40) erfasst sind und durch diese das Steuerventil (42) in der Zufuhrleitung (43) für das Wasser sowie vorzugsweise ein Ventil in einer Durchgangsöffnung für die Steuerung der Mengenzufuhr des Teepulvers in die wenigstens eine Einfüllöffnung (16) im Zylinder (15) betätigbar sind.

15. Mühle, vorzugsweise für eine Brüheinrichtung nach einem der Ansprüche 10 bis 14, die zum Mahlen insbesondere der in einen Teebehälter eingefüllten Teeblätter mit mindestens zwei zusammenwirkenden Mahlscheiben (56, 57) vorgesehen ist, von denen vorzugsweise die eine Mahlscheibe (57) durch einen Antrieb rotierbar ist, wobei das Mahlgut durch wenigstens eine Einfüllöffnung (16) im Zylinder (15) in diese Brühkammer (17) führbar ist, **dadurch gekennzeichnet, dass**
der mit einer sich nach unten verjüngenden Trichterform (52) ausgebildete Teebehälter (51) in einen Mühlenraum (65) und von diesem zu den Mahlscheiben (56, 57) führt, von denen die rotierbare Mahlscheibe (57) mit einem Mischorgan (60) drehbar verbunden ist, welches sich durch diesen Mühlenraum (65) vorzugsweise oben bis in den Teebehälter (51) erstreckt und beim Mahlen zusammen mit der einen Mahlscheibe (57) eine Rotationsbewegung ausführt, durch welche die Teeblätter gerührt werden, oder dass dieses Mischorgan (60) durch einen separaten Antrieb bzw. eine im Mühlengehäuse (55) vorgesehene Lagerung drehbar angeordnet ist.

16. Mühle nach Anspruch 15, **dadurch gekennzeichnet, dass**
das Mischorgan (60) aus einer koaxial zur Mahlscheibe (57) verlaufenden und mit ihr verbundenen Drehwelle (61) mit entlang an ihrem Umfang verteilt vorstehenden Mitnehmerelementen (62) ausgebildet ist.

17. Mühle nach Anspruch 15 oder 16, **dadurch gekennzeichnet, dass** der mit dieser sich nach unten verjüngenden Trichterform (52) ausgebildete Teebehälter (51) oberseitig mit einer Schutzabdeckung (53) versehen ist, die bewirkt, dass das Bedienpersonal beim Beschicken von Teeblättern mit den Fingern nur beschränkt in den Teebehälter hineinlangen kann.

18. Mühle nach einem der Ansprüche 15 bis 17, **dadurch gekennzeichnet, dass**
die zusammenwirkenden Mahlscheiben (56, 57) von einem Verstellmechanismus (63, 64) gegeneinander entlang der Rotationsachse verstellbar sind, um den Mahlgrad des durch diese geschnittenen Mahlguts zu verändern.

19. Mahlscheibe für eine Mühle nach einem der Ansprüche 15 bis 18, **dadurch gekennzeichnet, dass**
die Mahlscheiben (56, 57) eine Vielzahl von Zähnen (54) bei ihren einander zugekehrten Stirnflächen aufweisen, die annähernd radial ausgerichtet sind und dabei quer zur Drehachse (A) flach ausgebildet sind oder dass diese Schneidflächen zusammen im Querschnitt gesehen einen V-förmigen Einlauf bilden, wobei die Zähne (54) mit scharfen Schneiden versehen sind, damit die Teeblätter geschnitten und nicht zerquetscht werden.

20. Mahlscheibe nach Anspruch 19, **dadurch gekennzeichnet, dass** die annähernd radial ausgerichteten Zähne (54) in bestimmten Abständen aneinandergereiht sind und entlang ihrer Schneidfläche leicht gerundet sind.
